# EUROPEAN PATENT APPLICATION

(11) **EP 4 692 994 A1**
(43) Date of publication of application: **11.02.2026**
(21) Application number: 24936209.6
(22) Date of filing: 14.06.2024
(51) Int. Cl.: G06F 3/01

(54) **METHOD FOR CALIBRATING GLOVE DATA**

(71) Applicant: Shenzhen Shokz Co., Ltd., Shenzhen, Guangdong 518108 (CN)
(72) Inventor: YUAN, Yongshuai, Shenzhen, Guangdong 518108 (CN); DENG, Wenjun, Shenzhen, Guangdong 518108 (CN)
(74) Representative: Wang, Bo
(86) International application number: PCT/CN2024/099236
(87) International publication number: WO 2025/255807

(57) **Abstract**

Provided is a method for calibrating glove data. The method includes: obtaining first sensing data relating to a target finger joint of a user, the first sensing data being collected using at least one sensor, each of the at least one sensor being arranged in a glove body worn by the user and located at or near the target finger joint; obtaining a preset data range corresponding to the first sensing data, there is a first mapping relationship between data in the preset data range and a joint angle of the target finger joint; in response to determining that the first sensing data is outside the preset data range, updating the preset data range; and determining a second mapping relationship between data in the updated preset data range and the joint angle of the target finger joint.

## Description

### TECHNICAL FIELD

The present disclosure relates to the field of data processing, and in particular, to a method for calibrating glove data.

### BACKGROUND

With the gradual maturity of AR/VR technology and the rise of the metaverse concept, smart electronic devices have put forward higher requirements for human-computer interaction technology. Flexible sensors can be conveniently integrated into wearable devices such as smart clothing and smart gloves, thereby achieving accurate recognition and restoration of human body movements, which is one of the important underlying technologies of the metaverse and has received widespread attention and research. To achieve accurate recognition and restoration of hand movements, sensors are used to collect the hand movements, especially movements of fingers in a plurality of freedom degrees. The collected sensing data is then used to determine angles of the finger joints (e.g., bending and/or swing angles).

### SUMMARY

One or more embodiments of the present disclosure provide a method for calibrating glove data. The method includes: obtaining first sensing data relating to a target finger joint of a user, the first sensing data being collected using at least one sensor, each of the at least one sensor being arranged in a glove body worn by the user and located at or near the target finger joint; obtaining a preset data range corresponding to the first sensing data, there is a first mapping relationship between data in the preset data range and a joint angle of the target finger joint; in response to determining that the first sensing data is outside the preset data range, updating the preset data range; and determining a second mapping relationship between data in the updated preset data range and the joint angle of the target finger joint.

In some embodiments, the updating the preset data range includes: replacing an upper limit and/or a lower limit of the preset data range.

In some embodiments, at least a portion of the first sensing data is generated when the user wears the glove body and makes a designated action.

In some embodiments, the designated action includes a fist-clenching action, the fist-clenching action corresponding to a maximum joint angle of the target finger joint.

In some embodiments, the method further includes: when the user makes the fist-clenching action, in response to determining that the first sensing data is within the preset data range, updating the preset data range.

In some embodiments, the updating the preset data range includes: replacing an upper limit of the preset data range with the first sensing data.

In some embodiments, the designated action further includes a finger-spreading action, the finger-spreading action corresponding to a minimum joint angle of the target finger joint.

In some embodiments, the method further includes: when the user makes the finger-spreading action, in response to determining that the first sensing data is within the preset data range, updating the preset data range.

In some embodiments, the updating the preset data range includes: replacing a lower limit of the preset data range with the first sensing data.

In some embodiments, there are a plurality of target finger joints, the first sensing data relating to different target finger joints is generated when the user makes the same designated action.

In some embodiments, there are a plurality of target finger joints, the first sensing data relating to at least two different target finger joints in the plurality of target finger joints is generated when the user makes different designated actions.

In some embodiments, at least a portion of the first sensing data is dynamically collected when the user is wearing the glove body.

In some embodiments, the updating the preset data range includes: in response to determining that, before collecting the first sensing data, at least one or more sets of sensing data relating to the target finger joint are outside the preset data range, updating the preset data range using the first sensing data.

In some embodiments, the method further includes: in response to determining that the first sensing data is within the preset data range, determining a first joint angle of the target finger joint based on the first mapping relationship and the first sensing data; obtaining a preset joint angle range corresponding to the target finger joint; and in response to determining that the first joint angle is outside the preset joint angle range, updating the preset joint angle range.

In some embodiments, the updating the preset joint angle range includes: replacing an upper limit and/or a lower limit of the preset joint angle range.

In some embodiments, the method further includes: determining a first joint angle of the target finger joint based on the first sensing data and the second mapping relationship; obtaining a preset joint angle range corresponding to the target finger joint; and in response to determining that the first joint angle is outside the preset joint angle range, updating the preset joint angle range.

In some embodiments, the updating the preset joint angle range includes: replacing an upper limit and/or a lower limit of the preset joint angle range.

In some embodiments, the target finger joint includes a portion of finger joints of the user.

In some embodiments, the target finger joint includes all metacarpophalangeal joints and all proximal interphalangeal joints of the user.

In some embodiments, the first mapping relationship is a linear mapping relationship.

In some embodiments, the preset data range is determined based on a cross-assignment process, the cross-assignment process includes: obtaining initial sensing data, the initial sensing data being data generated when the user wears the glove body and makes a designated action; obtaining an initial data range, the initial data range having a lower limit greater than an upper limit; and in response to determining that the initial sensing data is outside the initial data range, obtaining an updated data range by updating the initial data range and designating the updated data range as the preset data range.

In some embodiments, the designated action includes a fist-clenching action, the fist-clenching action corresponding to a maximum joint angle of the target finger joint.

In some embodiments, the updating the initial data range includes: replacing an upper limit of the initial data range with the initial sensing data.

In some embodiments, the designated action includes a finger-spreading action, the finger-spreading action corresponding to a minimum joint angle of the target finger joint.

In some embodiments, the updating the initial data range includes: replacing a lower limit of the initial data range with the initial sensing data.

One or more embodiments of the present disclosure provide a system for calibrating glove data. The system includes: at least one storage medium including a set of instructions; and at least one processor in communication with the at least one storage medium, wherein when executing the set of instructions, the at least one processor causes the system to perform the method for calibrating glove data of the present disclosure.

One or more embodiments of the present disclosure provide a non-transitory computer-readable medium, the medium includes executable instructions, the executable instructions, when executed by at least one processor, cause the at least one processor to perform a method for calibrating glove data of the present disclosure.

### BRIEF DESCRIPTION OF THE DRAWINGS

The present disclosure is further illustrated in terms of exemplary embodiments. These exemplary embodiments are described in detail with reference to the drawings. These embodiments are not limiting. In these embodiments, the same reference numerals denote the same structures, wherein:
FIG. 1 is a schematic diagram illustrating an exemplary glove system according to some embodiments of the present disclosure.
FIG. 2 is a schematic diagram illustrating joint positions of a hand of a user according to some embodiments of the present disclosure.
FIG. 3 is a schematic diagram illustrating a three-dimensional coordinate system of a hand of a user according to some embodiments of the present disclosure.
FIG. 4 is a schematic diagram illustrating an application scenario of a system for calibrating glove data according to some embodiments of the present application.
FIG. 5 is a block diagram illustrating an exemplary processing device according to some embodiments of the present disclosure.
FIG. 6 is a flowchart illustrating a method for calibrating glove data according to some embodiments of the present disclosure.
FIG. 7 is a flowchart illustrating a process of updating a preset joint angle range according to some embodiments of the present disclosure.
FIG. 8 is a flowchart illustrating a process of generating a preset data range according to some embodiments of the present disclosure.

### DETAILED DESCRIPTION

To more clearly illustrate the technical solutions of the embodiments of the present disclosure, the drawings used in the description of the embodiments are briefly introduced below. Obviously, the drawings in the following description are merely some examples or embodiments of the present disclosure. For a person of ordinary skill in the art, the present disclosure can be applied to other similar scenarios based on these drawings without creative effort. Unless obviously obtained from the context or the context illustrates otherwise, the same numeral in the drawings refers to the same structure or operation.

It should be understood that the terms "system," "device," "unit," and/or "module" used herein are methods for distinguishing components, elements, parts, sections or assemblies of different levels. However, if other words can achieve the same purpose, the words can be replaced by other expressions.

As used in the disclosure and the appended claims, the singular forms "a," "an," and "the" include plural referents unless the content clearly dictates otherwise. Generally, the terms "include" and "comprise" only indicate that clearly identified steps and elements are included. These steps and elements do not constitute an exclusive list. A method or device may also include other steps or elements.

Flowcharts are used in the present disclosure to illustrate operations performed by a system according to embodiments of the present disclosure. It should be understood that preceding or following operations are not necessarily performed precisely in sequence. On the contrary, each step can be processed in reverse order or simultaneously. Meanwhile, other operations can be added to these processes, or one or more operations can be removed from these processes.

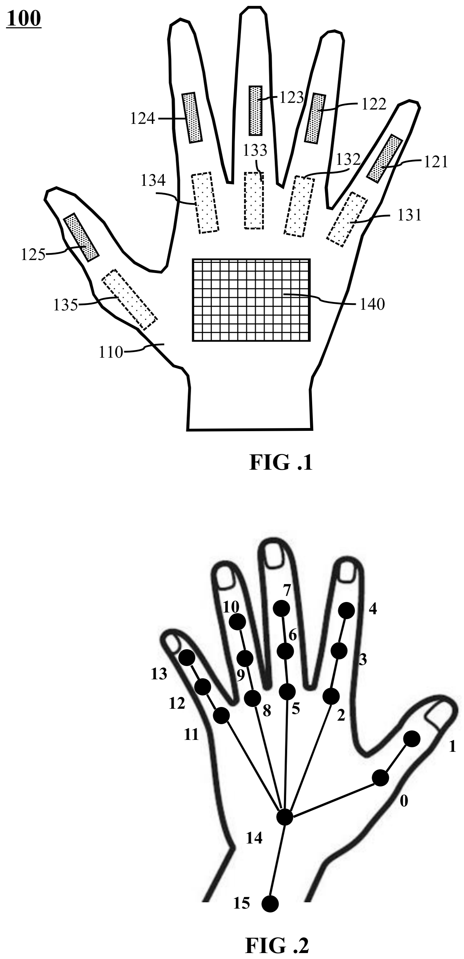

To achieve accurate recognition and restoration of hand movements, it is necessary to collect movements of the hand, especially the fingers, in a plurality of freedom degrees. For example, a glove system can be used to capture hand movements of a user (including finger movements). FIG. 1 is a schematic diagram illustrating an exemplary glove system according to some embodiments of the present disclosure. As shown in FIG. 1, a glove system 100 includes a glove body 110, a plurality of sensors (e.g., strain sensors, inertial sensors, etc.), and a processor 140. The plurality of sensors may be distributed at different positions on the glove body 110.

The glove system 100 refers to a system for capturing hand movements of a user (including finger movements). The glove system 100 may recognize the hand movements through one or more devices, for example, the devices may include a movement capture glove, a sign language glove, a VR glove, a force feedback glove, a haptic feedback glove, etc.

The glove body 110 refers to a wearable component for fitting with a hand. In some embodiments, to facilitate the glove body 110 fitting with hand joints (e.g., including interphalangeal joints, metacarpophalangeal joints, wrist joints, etc.), the glove body 110 has a structure adapted to the shape of the hand and extending along the hand joints. In some embodiments, the glove body 110 may be a flexible fabric that is prone to deformation (e.g., bending deformation) following the finger movements when subjected to an external force. In some embodiments, the glove body 110 may provide support for various sensors (e.g., the strain sensors), thereby facilitating an arrangement of the sensors. For example, the glove body 110 may include one or more layers of flexible structures (e.g., the flexible fabric). The strain sensor may be fixed on a surface of a specific layer of the flexible structure through pasting, pressing, or sewing.

In some embodiments, the sensor may be the inertial sensor (e.g., a nine-axis sensor, a gyroscope, etc.). The inertial sensor is arranged at a non-joint position of a finger (e.g., near a finger joint) and configured to measure posture or deformation data (e.g., a spatial position, a relative orientation, etc.) of a position point near the finger joint to estimate deformation (e.g., bending and its amplitude) of the finger and/or the finger joint, such that a finger joint angle may be determined.

In some embodiments, the sensor may include a combination of the strain sensor and the inertial sensor. For example, the plurality of sensors may include strain sensors arranged at finger joints and inertial sensors arranged at other positions (e.g., near the finger joints). Deformation (e.g., bending, swinging) of the fingers and the finger joints is determined more accurately by measuring deformation data of the finger joints combined with posture data of position points near the finger joints, thereby determining the finger joint angle more accurately.

In some embodiments, the sensors may include a plurality of strain sensors (e.g., first strain sensors 131-135 and second strain sensors 121-125 as shown in FIG. 1). When the user wears the glove body 110 and performs the finger movements, a finger region of the glove body 110 is subjected to an external force and deforms. The strain sensor may convert deformation information (e.g., a deformation direction, a deformation magnitude, etc.) at the finger joint into an electrical signal. The electrical signal generated by the strain sensor may reflect posture data at a corresponding finger region. In some embodiments, the strain sensor may include, but is not limited to, a capacitive strain sensor, an inductive sensor, a resistive sensor, a fiber optic sensor, etc.

In some embodiments, the strain sensor may be arranged at a finger joint of the glove body 110. FIG. 2 is a schematic diagram illustrating joint positions of a hand of a user according to some embodiments of the present disclosure. Finger joints of the hand may include metacarpophalangeal joints at positions 0, 2, 5, 8, and 11 and interphalangeal joints at positions 1, 3, 6, 9, 12, 4, 7, 10, and 13. The plurality of strain sensors may include first strain sensors (e.g., first strain sensors 131, 132, 133, 134, and 135) arranged at the metacarpophalangeal joints 0, 2, 5, 8, and 11. The first strain sensors are configured to measure deformation of the metacarpophalangeal joints in two freedom degrees. The plurality of strain sensors may further include second strain sensors (e.g., second strain sensors 121, 122, 123, 124, and 125) arranged at the interphalangeal joints 1, 3, 6, 9, 12, 4, 7, 10, and 13. The second strain sensors are configured to measure deformation of the interphalangeal joints in a single freedom degree. In some embodiments, a second strain sensor includes a single-freedom-degree sensor such as a single-axis sensor (e.g., an inductive bending sensor, a resistive bending sensor, or a capacitive stretch sensor). A first strain sensor includes a multi-freedom-degree sensor such as a multi-axis sensor (e.g., a capacitive multi-axis motion sensor).

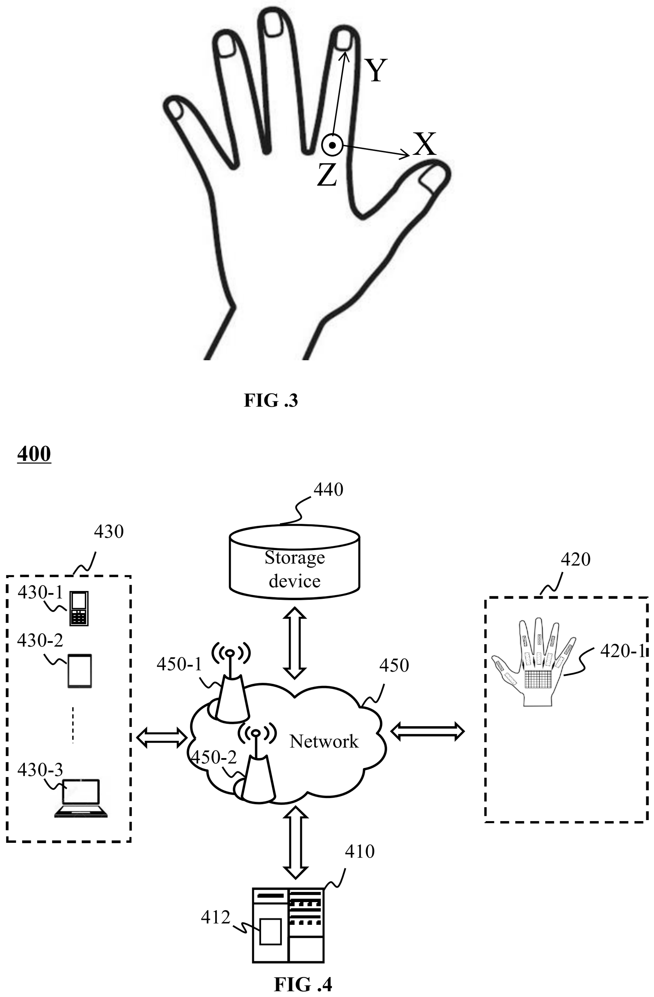

The term "freedom degree" used in the present disclosure refers to a dimension in which an object is able to move. To facilitate the description of the freedom degree of hand movement, a three-dimensional coordinate system is established for the hand movement, for example, the three-dimensional coordinate system shown in FIG. 3. In the coordinate system, a metacarpophalangeal joint is taken as an origin, a finger extension direction is a Y-axis, and a direction perpendicular to a hand plane is a Z-axis. The hand plane refers to a fitting plane of a palm portion of the hand. For example, when a palm of the hand is placed flat on a table, the table or a plane passing through the hand and parallel to the table may serve as the hand plane. The three-dimensional coordinate system may be used to describe the freedom degree of the hand movement. Specifically, in the three-dimensional coordinate system shown in FIG. 3, rotation of the hand around the X-axis is defined as bending, rotation of the hand around the Z-axis is defined as swinging, and rotation of the hand around the Y-axis is defined as rotation. An interphalangeal joint may only bend and rotate. In other words, deformation of the interphalangeal joint corresponds only to a single freedom degree of bending. A metacarpophalangeal joint may bend, swing, and rotate. In other words, deformation of the metacarpophalangeal joint corresponds to two freedom degrees of bending and swinging. Thus, when any interphalangeal joint performs a bending movement, the second strain sensor may measure deformation of the glove body 110 at the corresponding interphalangeal joint. When any metacarpophalangeal joint performs a bending or swinging movement, the first strain sensor may measure deformation of the glove body 110 at the corresponding metacarpophalangeal joint.

Continuing with reference to FIG. 2, the interphalangeal joints 4, 7, 10, and 13 are distal interphalangeal joints relatively far from the palm. The interphalangeal joints 1, 3, 6, 9, and 12 are proximal interphalangeal joints relatively close to the palm. In some embodiments, a movement of a distal interphalangeal joint manifests as following movement of a preceding joint (i.e., a proximal interphalangeal joint). The distal interphalangeal joint typically does not bend independently, but bends together with the proximal interphalangeal joint. Therefore, the second strain sensors may not be separately disposed at the distal interphalangeal joints. The second strain sensors may be disposed only at the proximal interphalangeal joints. In some embodiments, deformation data of the distal interphalangeal joint may be generated by mapping deformation data of a corresponding proximal interphalangeal joint. Thus, the glove system 100 may collect deformation data of at least five proximal interphalangeal joints in the single freedom degree through the plurality of second strain sensors. The glove system 100 may collect deformation data of five metacarpophalangeal joints in two freedom degrees through the plurality of first strain sensors. In total, the deformation data collected by the plurality of second strain sensors (at least 5 freedom degrees in total) and the deformation data collected by the plurality of first strain sensors (10 freedom degrees in total) together provide deformation data of at least 15 freedom degrees of the fingers of the user, thereby determining the posture data of the fingers.

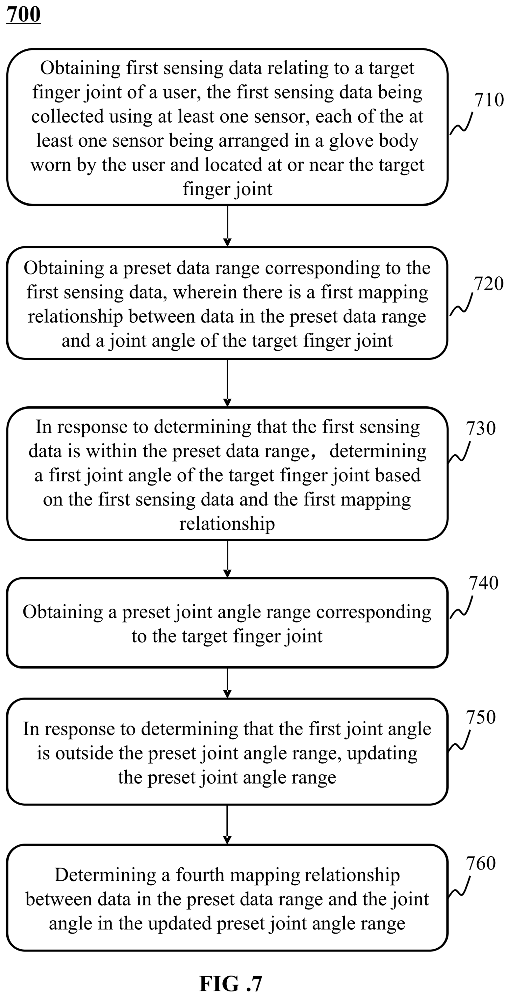

Some embodiments in the present disclosure control product cost, reduce subsequent data processing cost, and ensure measurement accuracy by combining a dual-freedom-degree strain sensor (e.g., the first strain sensor) with a single-freedom-degree strain sensor (e.g., the second strain sensor). More descriptions regarding the first strain sensor and the second strain sensor may be found in FIG. 7 and its related descriptions.

The glove system 100 may further include a processor 140. The processor 140 is configured to receive and process data collected by the plurality of sensors (e.g., one or a combination of the inertial sensor and the strain sensor). For example, the processor 140 may obtain deformation data from the strain sensor and analyze and process the deformation data. For example, the processor 140 may determine a deformation magnitude and a deformation angle of each finger joint through a mapping relationship (e.g., a mapping function or a trained machine learning model). In some embodiments, the processor 140 may directly process data collected by the plurality of strain sensors. Alternatively, the processor 140 may receive the data collected by the plurality of strain sensors and transmit the data to an external device for data processing. In some embodiments, the processor 140 may execute a corresponding function based on a processing result of the data. For example, the corresponding function includes gesture reproduction, voice broadcast, gesture control, etc. In some embodiments, the processor 140 may interact with an external processing device based on the processing result of the data. The external device includes upper computers such as a computer, a mobile phone, or a VR device. The interaction may include such as controlling an on/off of the external device, adjusting the volume, controlling a program process of the external device (e.g., controlling movement of a game character), providing fitness feedback, etc.

In some embodiments, a mapping relationship between sensing data and a finger joint angle may be constructed. Then, based on the sensing data collected by sensors at and/or near the finger joints, the joint angle of the finger joint is determined based on the mapping relationship and the sensing data. The mapping relationship is constructed based on sensing data within a certain range and corresponding joint angles. Due to factors such as individual differences (e.g., differences in finger flexibility, differences in strength of finger linkage), different wearing manners, etc., sensing data generated when different users wear the glove may vary (e.g., ranges of the finger joint angles are different). This causes the mapping relationship to be unavailable or inaccurate. Therefore, the mapping relationship needs to be calibrated for different users or user groups to make the mapping relationship more accurate.

FIG. 4 is a schematic diagram illustrating an application scenario of a system for calibrating glove data according to some embodiments of the present application. A system 400 shown in the embodiments of the present disclosure may be applied in various software, systems, platforms, and devices. In some embodiments, the system 400 may be used to update a preset data range corresponding to sensing data and determine a mapping relationship between data within the updated preset data range and a joint angle of a target finger joint. In some embodiments, the system 400 may determine the joint angle of the target finger joint based on the mapping relationship.

As shown in FIG. 4, the system 400 may include a processing device 410, a collection device 420, a terminal 430, a storage device 440, and a network 450.

In some embodiments, the processing device 410 may process data and/or information obtained from other devices or system components. The processing device 410 may execute program instructions based on the data, the information, and/or a processing result to perform one or more functions described in the present disclosure. For example, the processing device 410 may obtain first sensing data related to at least two target finger joints of a user from the collection device 420. The first sensing data is collected by at least two strain sensors. As another example, the processing device 410 may obtain a preset data range corresponding to the first sensing data, and there is a first mapping relationship between data in the preset data range and a joint angle of the target finger joint. The processing device 410 may further update the preset data range. The processing device 410 may determine a second mapping relationship between data in the updated preset data range and the joint angle of the target finger joint.

In some embodiments, the processing device 410 may be a single processing device or a group of processing devices, such as a server or a server group. The group of processing devices may be centralized or distributed (e.g., the processing device 410 may be a distributed system). In some embodiments, the processing device 410 may be local or remote. For example, the processing device 410 may be the processor 140 on the glove system. As another example, the processing device 410 may access information and/or data in the collection device 420, the terminal 430, and the storage device 440 through the network 450. As another example, the processing device 410 may be directly connected to the collection device 420, the terminal 430, and the storage device 440 to access stored information and/or data. In some embodiments, the processing device 410 may be implemented on a cloud platform.

In some embodiments, the processing device 410 may include a processing engine 412. The processing engine 412 may process data and/or information related to the sensing data to perform one or more methods or functions described in the present disclosure. For example, the processing engine 412 may update the preset data range. The processing engine 412 may determine the second mapping relationship between data in the updated preset data range and the joint angle of the target finger joint. As another example, the processing engine 412 may determine a first joint angle of the target finger joint based on the first sensing data and the second mapping relationship. In response to determining that the first joint angle is outside the preset joint angle range, the processing engine 412 may update the preset joint angle range.

In some embodiments, the processing engine 412 may include one or more processing engines (e.g., a single-chip processing engine or a multi-chip processor). In some embodiments, the processing engine 412 may be integrated into the collection device 420 or the terminal 430.

In some embodiments, the collection device 420 may be used to collect posture data of fingers of a user and/or deformation information for characterizing movement of a finger joint. For example, the collection device 420 may include a first collection device 420-1 for collecting the first sensing data related to the at least two target finger joints of the user. In some embodiments, the first collection device 420-1 may be one or a combination of collection devices such as a movement capture glove, a sign language glove, a VR glove, a force feedback glove, a haptic feedback glove, etc. In some embodiments, the first collection device 420-1 may be the glove system 100 or a portion of the glove system 100. More descriptions regarding the glove system 100 may be found in FIG. 1 and its related descriptions.

In some embodiments, the collection device 420 may transmit the information and/or data to the processing device 410, the terminal 430, and the storage device 440 through the network 450. In some embodiments, the collection device 420 may be directly connected to the processing device 410 or the storage device 440 to transmit the information and/or data. For example, the collection device 420 (e.g., the first collection device 420-1) and the processing device 410 may be different portions of the same electronic device (e.g., the glove system) and connected by a metal wire.

In some embodiments, the terminal 430 may be a terminal used by a user or another entity. For example, the terminal 430 may be a terminal carrying the collection device 420. As another example, the terminal 430 may be a terminal that communicates with the collection device 420 or any one or more components in the system 400 through the network 450. In some embodiments, the collection device 420 may be a portion of the terminal device 430.

In some embodiments, the terminal 430 may include a mobile device 430-1, a tablet computer 430-2, a laptop computer 430-3, etc., or any combination thereof. In some embodiments, the mobile device 430-1 includes a smart home device, a wearable device, a smart mobile device, a virtual reality device, an augmented reality device, or the like, or any combination thereof. In some embodiments, the smart home device includes a smart lighting device, a smart appliance control device, a smart monitoring device, a smart television, a smart camera, an intercom, or the like, or any combination thereof. In some embodiments, the wearable device includes a smart bracelet, smart footwear, smart glasses, a smart helmet, a smart watch, smart earphones, smart clothing, a smart backpack, a smart accessory, or the like, or any combination thereof. In some embodiments, the smart mobile device includes a smart phone, a personal digital assistant (PDA), a gaming device, a navigation device, a point of sale (POS) device, or the like, or any combination thereof. In some embodiments, the virtual reality device and/or the augmented reality device includes a virtual reality helmet, virtual reality glasses, a virtual reality eye mask, an augmented virtual reality helmet, augmented reality glasses, an augmented reality eye mask, or the like, or any combination thereof.

In some embodiments, the terminal 430 may obtain/receive data related to other components in the system 400. For example, the terminal 430 may obtain the first sensing data related to at least two target finger joints of a user that is collected by the collection device 420. As another example, the terminal 430 may obtain/receive the first joint angle of each target finger joint determined by the processing device 410 based on the first sensing data. As another example, the terminal device is configured to display the information and/or data related to the system 400 to the user (e.g., display an exemplary diagram of a designated action, etc.) and receive a feedback from the user.

The storage device 440 may store data and/or information obtained from other devices or system components. In some embodiments, the storage device 440 may store data obtained from the collection device 420 or data processed by the processing device 410. For example, the storage device 440 may store a correspondence relationship and/or a mapping relationship between the sensing data and the joint angles. As another example, the storage device 440 may store the first sensing data collected by the collection device 420, and store the first joint angle of the target finger joint obtained after processing by the processing device 410. In some embodiments, the storage device 440 may further store data and/or instructions that the processing device 410 executes or uses to perform the exemplary methods described in the present disclosure. In some embodiments, the storage device 440 may include a mass storage device, a removable storage device, a volatile read-write memory, a read-only memory (ROM), or the like, or any combination thereof. In some embodiments, the storage device 440 may be implemented on the cloud platform.

In some embodiments, the storage device 440 may be connected to the network 450 to communicate with one or more components in the system 400 (e.g., the processing device 410, the collection device 420, the terminal 430). One or more components in the system 400 may access the data or instructions stored in the storage device 440 through the network 450.

The network 450 may facilitate an exchange of information and/or data. In some embodiments, one or more components in the system 400 (e.g., the processing device 410, the collection device 420, the terminal 430, and the storage device 440) may send/receive information and/or data to/from other components in the system 400 through the network 450. For example, the processing device 410 may obtain the first sensing data or deformation information of movement at the finger joint from the collection device 420 or the storage device 440 through the network 450. The terminal 430 may obtain any one or more of the first sensing data, the first joint angle of the target finger joint, or the like from the processing device 410 or the storage device 440 through the network 450. In some embodiments, the network 450 may be any type of wired or wireless network, or any combination thereof. In some embodiments, the system 400 may include one or more network access points. For example, the system 400 may include wired or wireless network access points such as base stations and/or wireless access points 450-1, 450-2, ..., through which one or more components of the system 400 are connected to the network 450 to exchange data and/or information.

The above description is for illustrative purposes only, and actual application scenarios may have various changes. It should be noted that the system 400 is provided merely for illustrative purposes and is not intended to limit the scope of the present disclosure. For those of ordinary skill in the art, various modifications or changes may be made according to the descriptions of the present disclosure. However, these changes and modifications do not depart from the scope of the present disclosure.

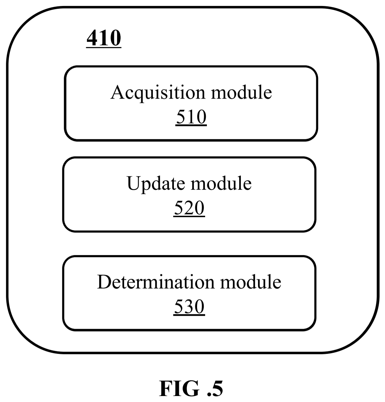

FIG. 5 is a block diagram illustrating an exemplary processing device according to some embodiments of the present disclosure.

As shown in FIG. 5, the processing device 410 may include an acquisition module 510, an update module 520, and a determination module 530.

The acquisition module 510 is configured to obtain first sensing data related to a target finger joint of a user. The first sensing data is collected using at least one sensor. Each of the at least one sensor is arranged in a glove body worn by the user and located at or near the target finger joint. In some embodiments, at least a portion of the first sensing data is data generated when the user wears the glove body and makes a designated action. In some embodiments, the first sensing data is data dynamically collected when the user is wearing the glove body. The dynamically collected data refers to sensing data collected in real time when the user is wearing the glove body and making any hand action.

The acquisition module 510 is also configured to obtain a preset data range corresponding to the first sensing data, and there is a first mapping relationship between data in the preset data range and a joint angle of the target finger joint. The preset data range refers to a data range generated based on a preset lower limit and a preset upper limit of the first sensing data. The first mapping relationship is used to reflect a relationship between sensing data corresponding to the target finger joint and the joint angle. The sensing data corresponding to the target finger joint is within the preset data range. In some embodiments, the acquisition module 510 may further generate the first mapping relationship based on sample sensing data and sample joint angles.

The update module 520 may be configured to update the preset data range in response to determining that the first sensing data is outside the preset data range. For example, in response to determining that the first sensing data is outside the preset data range, the update module 520 may replace the upper limit and/or the lower limit of the preset data range. In some embodiments, the update module 520 is configured to update the preset data range based on collected first sensing data when the user makes the designated action. For example, the designated action includes a fist-clenching action, and the fist-clenching action corresponds to a maximum joint angle of the target finger joint. When the user makes the fist-clenching action, in response to determining that the first sensing data is within the preset data range, the update module 520 updates the preset data range. In some embodiments, the designated action includes a finger-spreading action, and the finger-spreading action corresponds to a minimum joint angle of the target finger joint. When the user makes the finger-spreading action, in response to determining that the first sensing data is within the preset data range, the update module 520 updates the preset data range. In some embodiments, the update module 520 may be further configured to update the preset data range using the dynamically collected data.

The determination module 530 may be configured to determine a second mapping relationship between data in the updated preset data range and the joint angle of the target finger joint. The second mapping relationship is used to reflect a relationship between sensing data corresponding to the target finger joint and the joint angle. The sensing data corresponding to the target finger joint is within the updated preset data range. The second mapping relationship is obtained based on a correction of the first mapping relationship. In some embodiments, the determination module 530 is configured to correct the first mapping relationship based on the updated preset data range to obtain the second mapping relationship between data in the updated preset data range and the joint angle of the target finger joint.

In some embodiments, the acquisition module 510 may also be configured to obtain a preset joint angle range corresponding to the target finger joint. The preset joint angle range refers to a data range generated based on a preset angle lower limit and a preset angle upper limit of the joint angle of the target finger joint. Further, in response to determining that the first joint angle is outside the preset joint angle range, the update module 520 may update the preset joint angle range. Further, the determination module 530 may determine a third mapping relationship between data in the updated preset data range and a joint angle in the updated preset joint angle range.

In some embodiments, the processing device 410 may include one or more additional modules such as a storage module (not shown) for storing data. In some embodiments, the processing device 410 may be integrated into the processing device 410.

The methods disclosed in the present disclosure may be stored in a storage device (e.g., the storage device 440 or a storage unit of the processing device 410) in the form of a program or a set of instructions. When the processing device 410, the processing engine 412, or the modules shown in FIG. 5 execute the program or the set of instructions, the methods may be implemented. In some embodiments, the methods disclosed in the present disclosure may include one or more additional operations/steps, and/or omit one or more operations/steps. In addition, the order of the operations/steps in the methods is not limiting.

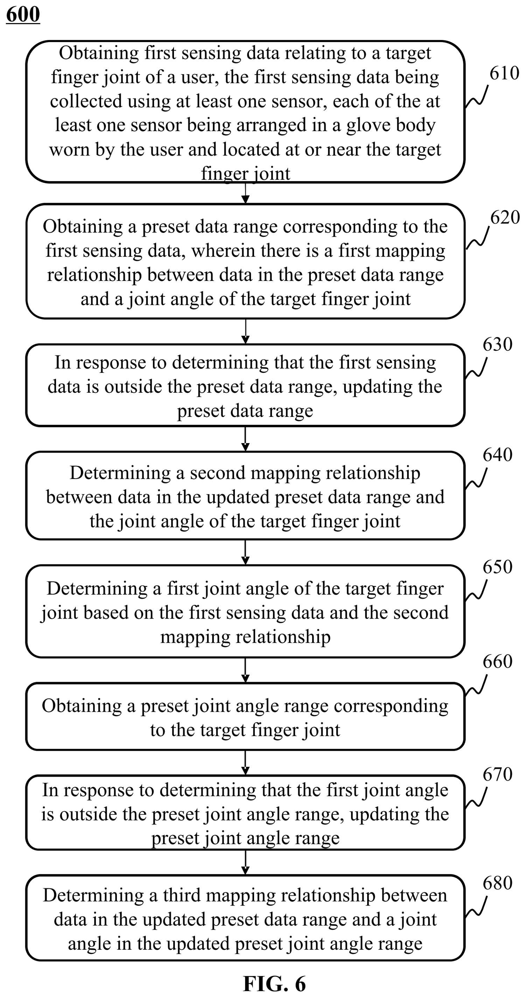

FIG. 6 is a flowchart illustrating a method for calibrating glove data according to some embodiments of the present disclosure.

In some embodiments, a method 600 may be executed by the processing device 410. As shown in FIG. 6, the method 600 may include the following operations.

In 610, first sensing data relating to a target finger joint of a user may be obtained, the first sensing data being collected using at least one sensor, each of the at least one sensor being arranged in a glove body worn by the user and located at or near the target finger joint.

The finger joint may be a joint in a finger of the user (e.g., a thumb, an index finger, a middle finger, a ring finger, or a little finger). For example, the finger joint may include an interphalangeal joint (e.g., a proximal interphalangeal joint, a distal interphalangeal joint), a metacarpophalangeal joint, etc. The target finger joint may be one or a combination of the finger joints described above.

In some embodiments, the target finger joint may include all finger joints of the user. The processing device 410 may correct the first mapping relationship corresponding to all finger joints of the user.

In some embodiments, the target finger joint includes a portion of the finger joints of the user. For example, the target finger joint may be a finger joint where the sensing data generated when different users wear the glove has a large difference. It is understood that the sensing data corresponding to the finger joint has a large difference when different users wear the glove, which indicates that the sensing data corresponding to these finger joints is more susceptible to individual differences. These finger joints are taken as the target finger joint may make the correction of the first mapping relationship more targeted and reduce the amount of computation.

In some embodiments, the target finger joint includes all metacarpophalangeal joints and all proximal interphalangeal joints of the user. It should be noted that the interphalangeal joint includes the proximal interphalangeal joints and the distal interphalangeal joints. However, the distal interphalangeal joints generally cannot move (e.g., bend) completely independently but exhibit following movement relative to the proximal interphalangeal joints. Therefore, the target finger joint may include only all metacarpophalangeal joints and all proximal interphalangeal joints of the user, but not include the distal interphalangeal joints.

In some embodiments of the present disclosure, all metacarpophalangeal joints and all proximal interphalangeal joints are taken as the target finger joints eliminates the need to arrange sensors at the distal interphalangeal joints, which simplifies the structure of the glove system and saves costs. At the same time, the sensing data corresponding to the target finger joint does not require data screening or other processing, thereby simplifying the processing steps.

The first sensing data may be used to characterize posture and/or movement information of the target finger joint of the user. The first sensing data may be collected using at least one sensor. Each of the at least one sensor is arranged in the glove body worn by the user and located at or near the target finger joint. For example, the first sensing data may be collected using the glove system 100 shown in FIG. 1 (hereinafter referred to as the glove system). More descriptions regarding the glove system 100, the glove body 110, and the sensor may be found in FIG. 1 and its related descriptions.

The first sensing data may include sensing data in one or more freedom degrees. For example, the metacarpophalangeal joint includes sensing data in two freedom degrees: bending and swinging. The processing device 410 may obtain sensing data in each freedom degree separately as the first sensing data, or obtain sensing data in both freedom degrees simultaneously as the first sensing data. For ease of description, the sensing data in the bending freedom degree will be used as an example for illustration below.

In some embodiments, the processing device 410 may be independent of the glove system. The processing device 410 may obtain the first sensing data from the glove system. For example, the processing device 410 may obtain the first sensing data from the glove system via a network. As another example, the processing device 410 may be the processor 140 on the glove system and connected to a plurality of strain sensors located on the glove body, thereby obtaining the first sensing data. In some embodiments, the processing device 410 may obtain the first sensing data from a storage device (e.g., the storage device 440).

In some embodiments, at least a portion of the first sensing data may be data generated when the user wears the glove body and makes a designated action. A collection of sensing data when the user makes the designated action may be referred to as a static collection. The sensing data may be referred to as statically collected data.

The designated action refers to various preset hand actions or gestures. In some embodiments, the designated action includes a fist-clenching action and a finger-spreading action. The fist-clenching action refers to clenching a fist with five fingers, it may be used to reflect a maximum joint angle (maximum bending angle) of the target finger joint. The finger-spreading action refers to spreading the five fingers out horizontally, it may be used to reflect a minimum joint angle (minimum bending angle) of the target finger joint. That is, the fist-clenching action and the finger-spreading action correspond to maximum deformation and minimum deformation of the finger joint in the bending freedom degree, respectively. Correspondingly, the sensing data corresponding to the fist-clenching action and the finger-spreading action may correspond to the maximum bending angle and the minimum bending angle of the finger joint angle when the user wears the glove, respectively, i.e., an effective range of the finger joint angle. Therefore, the data generated when the user makes the designated action may be obtained as the first sensing data, and the first mapping relationship may be corrected based on the first sensing data.

In some embodiments, the target finger joint includes a plurality of target finger joints. The first sensing data related to different target finger joints is generated when the user makes the same designated action. That is, for the different target finger joints, the processing device 410 may collect sensing data corresponding to each of the plurality of target finger joints when the user makes the same designated action (e.g., the fist-clenching action, the finger-spreading action), as the first sensing data corresponding to each of the plurality of target finger joints.

In some embodiments of the present disclosure, by collecting sensing data for the different target finger joints under the same designated action, the overall calibration process is simplified, thereby simplifying the calculation and improving the efficiency of acquiring and processing the sensing data.

In some embodiments, the target finger joint includes the plurality of target finger joints. The first sensing data related to at least two different target finger joints is generated when the user makes different designated actions. If the different target finger joints all make the same designated action, it is possible that deformation of some finger joints is not the limit of their free variation or when making other actions. In this case, using separate calibration actions is more conducive to reflecting the relationship between the upper and lower limits of the sensing data of the finger or the finger joint and the upper and lower limits of the joint angle of the finger. Merely by way of example, during the fist-clenching action, the bending angle of the finger joint of the thumb (e.g., the metacarpophalangeal joint) may not reach its upper limit of bending. In this case, the corresponding sensing data may also fail to reach the upper limit. Therefore, the first sensing data for the finger joint of the thumb may be collected based on another designated action (e.g., bending the thumb against the palm). For other finger joints (e.g., finger joints of the index finger, the middle finger, etc.), the corresponding first sensing data may be collected when the user makes the fist-clenching action.

In some embodiments of the present disclosure, considering whether different designated actions allow the different target finger joints to reach the deformation (e.g., bending) limit (e.g., the upper limit and/or the lower limit), the different designated actions are used to obtain the sensing data for each of the plurality of target finger joints. This is beneficial for accurately obtaining the joint angle and the actual effective range of the sensing data for the different target finger joints, which provides an effective foundation for subsequent calibration of the mapping relationship between the joint angle and the sensing data, thereby improving the accuracy of the calibration.

In some embodiments, the first sensing data may be data dynamically collected when the user wears the glove body. The dynamically collected data refers to sensing data collected in real-time when the user wears the glove body and makes any hand action. An arbitrary hand action may be an action of interest or another random action made by the user while wearing the glove body. Real-time collection may be performed based on a preset time interval (e.g., 10 Hz-500 Hz). It is understood that the dynamically collected data may reflect posture or deformation information of different fingers or finger joints of the user under various hand actions in real time. Therefore, the first sensing data is more abundant and may cover more hand action scenarios. In addition, the first sensing data may also compensate for the deficiency of statically collected data, thereby making subsequent calibration of the first mapping relationship more accurate.

It should be noted that the first sensing data may include one or a combination of the statically collected data and the dynamically collected data. For example, the processing device 410 may obtain the statically collected data and calibrate the first mapping relationship based on the statically collected data. The processing device 410 may further dynamically calibrate the first mapping relationship based on dynamically collected data when the user is wearing the glove body.

In 620, a preset data range corresponding to the first sensing data may be obtained, and there is a first mapping relationship between data in the preset data range and a joint angle of the target finger joint.

The preset data range refers to a data range generated based on a preset lower limit and a preset upper limit of the first sensing data. The preset data range may be represented in the form of a numerical interval, e.g., [1, 100]. 1 represents the lower limit of the preset data, and 100 represents the upper limit of the preset data. In the present disclosure, the lower limit may also be referred to as a minimum value, and the upper limit may be referred to as a maximum value.

In some embodiments, the preset data range includes data ranges for different users and/or user groups. For example, the preset data range may be a preset data range for a male group, a preset data range for a female group, etc.

In some embodiments, the preset data range may further include data ranges for different target finger joints. Merely by way of example, the preset data range may include a preset data range of the metacarpophalangeal joint corresponding to an index finger or a preset data range of an interphalangeal joint corresponding to the index finger.

The preset data range may be determined based on historical first sensing data generated by a plurality of users wearing a sample glove body. The historical first sensing data may be first sensing data collected over a past time period (e.g., a past day, a past week, etc.). In some embodiments, the processing device 410 may determine the preset data range based on a statistical value of historical sensing data. For example, the preset data range may be determined based on a minimum value and a maximum value of all historical sensing data. As another example, a minimum value and a maximum value of the historical first sensing data of the plurality of different users may be obtained first. An average value of a plurality of minimum values may be determined as the lower limit of the preset data range. An average value of a plurality of maximum values may be determined as the upper limit of the preset data range. The preset data range is then obtained.

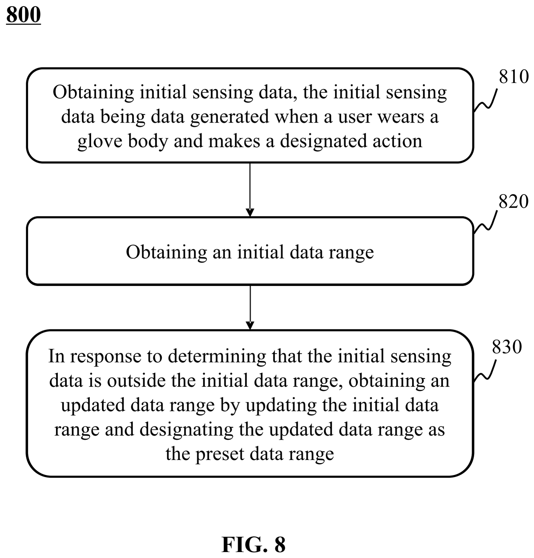

In some embodiments, the processing device 410 may generate the preset data range based on a cross-assignment process. More descriptions regarding generating the preset data range may be found in FIG. 8 and its related descriptions.

The first mapping relationship may be used to reflect a relationship between the sensing data corresponding to the target finger joint and the joint angle. The sensing data corresponding to the target finger joint is within the preset data range.

The first mapping relationship may be represented in a plurality of forms. In some embodiments, the first mapping relationship may be a mapping function. For example, the first mapping relationship may be a mapping function (e.g., a polynomial) with the sensing data as an independent variable and the joint angle as a dependent variable. In some embodiments, the first mapping relationship may be a machine learning model. The machine learning model uses the sensing data as an input and the joint angle as an output. The machine learning model may be a Recurrent Neural Network (RNN) model or another deep neural network model.

In some embodiments, the first mapping relationship includes a mapping function or a machine learning model corresponding to each of the plurality of target finger joints. For example, for a specific target finger joint, a corresponding mapping function uses sensing data corresponding to the specific target finger joint as the independent variable and a joint angle of the specific target finger joint as the dependent variable. As another example, for a specific target finger joint, a corresponding mapping function may use sensing data corresponding to all target finger joints as the independent variable and a joint angle of the specific target finger joint as the dependent variable.

In some embodiments, the first mapping relationship may be in the form of a linear mapping relationship. That is, any set of sensing data corresponds uniquely to one joint angle. The processing device 410 may input a set of sensing data into the linear mapping relationship to obtain a joint angle corresponding to the sensing data. It is understood that the sensing data has a specific data range (hereinafter also referred to as an input range), and the output joint angle also has a certain data range (hereinafter also referred to as an output range). An extreme value (e.g., the upper limit or the lower limit) in the input range corresponds to an extreme value (e.g., the upper limit or the lower limit) in the output range. In some embodiments of the present disclosure, the linear mapping relationship is used as a representation of the first mapping relationship, which enables more efficient updating of a correspondence between the first sensing data and the joint angle by updating an extreme value (e.g., the upper limit, the lower limit) of the input range and/or the output range.

In some embodiments, the processing device 410 may generate the first mapping relationship based on sample sensing data and a sample joint angle. For example, the processing device 410 may obtain a plurality of sets of sample sensing data of a sample finger joint collected when a plurality of sample users wear the glove body. For each of the plurality of sets of sample sensing data, a corresponding sample joint angle is obtained, and a correspondence between each of the plurality of sets of sample sensing data and its corresponding sample joint angle is determined. The first mapping relationship is determined based on the correspondence. For example, the correspondence between each of the plurality of sets of sample sensing data and its corresponding sample joint angle may be obtained through data fitting. The correspondence may serve as the first mapping relationship represented in the form of the mapping function. As another example, each of the plurality of sets of sample sensing data and its corresponding sample joint angle may be used as training data for the machine learning model. The sample joint angle serves as a training label for each of the plurality of sets of sample sensing data. The trained machine learning model may serve as the machine learning model.

In 630, in response to determining that the first sensing data is outside the preset data range, the preset data range may be updated.

In some embodiments, in response to determining that the first sensing data is outside the preset data range, the processing device 410 may replace the upper limit and/or the lower limit of the preset data range. For example, when a current first sensing data is greater than the upper limit of the preset data range, the processing device 410 may use the first sensing data as the upper limit of the preset data range. Similarly, when the current first sensing data is less than the lower limit of the preset data range, the processing device 410 may use the first sensing data as the lower limit of the preset data range. It is understood that the first sensing data is actually collected data. By replacing the upper limit and/or the lower limit of the preset data range with the first sensing data, the preset data range is updated.

In some embodiments, the processing device 410 may update the preset data range based on the collected first sensing data when the user makes the designated action.

In some embodiments, the designated action includes the fist-clenching action, and the fist-clenching action corresponds to a maximum joint angle of the target finger joint. The fist-clenching action refers to a hand action in which the user wearing the glove clenches five fingers together into a fist shape. The maximum joint angle of the target finger joint corresponding to the fist-clenching action reflects a maximum deformation of the target finger joint in a bending freedom degree, i.e., a maximum bending angle.

In some embodiments, when the user makes the fist-clenching action, in response to determining that the first sensing data is outside the preset data range, the processing device 410 may update the preset data range. For example, the processing device 410 may replace the upper limit of the preset data range with the first sensing data to update the preset data range. It is understood that when the user makes the fist-clenching action, the first sensing data corresponds to an actual upper limit value of sensing data generated by the user. The upper limit of the preset data range is replaced with the first sensing data, thereby making the input range conform to the actual situation.

In some embodiments, the processing device 410 may perform a plurality of rounds of iterative updates based on first sensing data corresponding to the fist-clenching action of the user collected a plurality of times, thereby achieving iterative updating of the upper limit of the preset data range. This makes the updated upper limit of the preset data range more accurate and avoids situations where the first sensing data does not reach the upper limit due to factors such as the fist-clenching action not meeting requirements (e.g., insufficient force, non-standard action), or the like.

In some embodiments, the designated action includes the finger-spreading action. The finger-spreading action corresponds to a minimum joint angle of the target finger joint. The finger-spreading action refers to a hand action where five fingers of the user wearing the glove are spread out in a flat and extended shape. The minimum joint angle of the target finger joint corresponding to the finger-spreading action reflects a minimum deformation of the target finger joint in the bending freedom degree, i.e., a minimum bending angle.

In some embodiments, when the user makes the finger-spreading action, in response to determining that the first sensing data is within the preset data range, the processing device 410 updates the preset data range. For example, the processing device 410 may replace the lower limit of the preset data range with the first sensing data to update the preset data range. It is understood that when the user makes the finger-spreading action, the first sensing data corresponds to an actual lower limit value of sensing data generated by the user. The lower limit of the preset data range is replaced with the first sensing data, thereby making the input range conform to an actual situation.

In some embodiments, the processing device 410 may perform a plurality of rounds of iterative updates on the lower limit of the preset data range based on the first sensing data corresponding to the finger-spreading action collected a plurality of times. This makes the lower limit of the updated preset data range more accurate and avoids a situation such as a failure of the first sensing data to reach the lower limit, or the like, due to the finger-spreading action not meeting requirements.

In some embodiments of the present disclosure, by obtaining the first sensing data when the user performs the designated action and updating the preset data range when the first sensing data is within the preset data range, the preset data range is updated based on actual sensing data generated when the target finger joint is at a deformation limit, thereby achieving calibration of the mapping relationship, avoiding inaccurate mapping results caused by improper wearing, and improving accuracy of the mapping relationship.

The processing device 410 also updates the preset data range using dynamically collected data. For example, when the user wears the glove, the processing device 410 obtains the sensing data related to the target finger joint of the user in real time or at preset time intervals and determines whether the sensing data is outside the preset data range. If one or more sets of sensing data are outside the preset data range, the processing device 410 starts collection of the first sensing data and updates the preset data range based on the first sensing data. An update manner includes replacing the upper limit and/or the lower limit of the preset data range with the first sensing data.

The dynamically collected data may be subject to interference. A source of the interference may be an external force pulling the glove or an external object hitting the glove. In this case, the dynamically collected data does not truly reflect the hand action performed by the user. If the preset data range is updated using the interfered data, it will cause deviations in subsequent calibrations. To avoid this problem, in some embodiments where the preset data range is updated using the dynamically collected data, a condition that the historical sensing data is also outside the preset data range needs to be satisfied. Specifically, in response to determining that at least one or more sets of sensing data related to the target finger joint of the user are also outside the preset data range before collecting the first sensing data, the processing device 410 updates the preset data range using the first sensing data.

In some embodiments of the present disclosure, by updating the preset data range using the dynamically collected data, real-time updates of the upper limit and/or the lower limit of the preset data range are achieved. This makes the updated preset data range more consistent with the actual situation. Furthermore, the longer the user wears the glove and the more random actions the user performs, the more accurate the updated preset data range becomes.

In 640, a second mapping relationship between data in the updated preset data range and the joint angle of the target finger joint may be determined.

Similar to the first mapping relationship, the second mapping relationship reflects a relationship between the sensing data corresponding to the target finger joint and the joint angle. The sensing data corresponding to the target finger joint is within the updated preset data range. The second mapping relationship is obtained based on a correction of the first mapping relationship.

In some embodiments, the processing device 410 corrects the first mapping relationship based on the updated preset data range to obtain the second mapping relationship between the data in the updated preset data range and the joint angle of the target finger joint. For example, the first mapping relationship is represented by the mapping function. The processing device 410 performs data fitting processing based on the sensing data in the updated preset data range and the corresponding joint angle to obtain an updated mapping function. The updated mapping function serves as the second mapping relationship.

As another example, the first mapping relationship is represented by the trained machine learning model. The correction of the first mapping relationship by the processing device 410 is implemented based on a transfer learning algorithm. The trained machine learning model corresponding to the current first mapping relationship serves as an initial pre-trained model. The processing device 410 performs further training on the initial pre-trained model. Training samples include a plurality of sets of sensing data within the updated preset data range. Training labels include a joint angle corresponding to each of the plurality of sets of sensing data. During training, a value of a loss function is determined based on a difference between the output of the initial pre-trained model and a training label. Parameters of the initial pre-trained model are iteratively updated based on the value of the loss function until a training termination condition is satisfied (e.g., the loss function converges, a specific count of iterations are performed, etc.). An updated initial pre-trained model is obtained. The updated initial pre-trained model obtained from training serves as the second mapping relationship.

In some embodiments of the present disclosure, by updating the preset data range and correcting the first mapping relationship to obtain the second mapping relationship, the corresponding relationship between the sensing data of the target finger joint and the joint angle becomes more accurate and conforms to the actual situation of the user. This also avoids the influence of individual user differences or wearing manners on calculation results, thereby improving the accuracy of the joint angle of the target finger joint.

In 650, a first joint angle of the target finger joint may be determined based on the first sensing data and the second mapping relationship.

The first joint angle refers to a joint angle of the target finger joint output by the second mapping relationship. In some embodiments, the processing device 410 inputs any set of the first sensing data into the second mapping relationship, and the second mapping relationship outputs the first joint angle.

In 660, a preset joint angle range corresponding to the target finger joint may be obtained.

The preset joint angle range refers to a data range generated based on a lower limit and an upper limit of the preset angle range of the joint angle of the target finger joint. For example, the preset joint angle range is an interval [0, 90]. The lower limit of the preset angle range (e.g., 0, representing 0°) and the upper limit of the preset angle range (e.g., 90, representing 90°) are preset. In some embodiments, the preset joint angle range includes data ranges for different users and/or user groups. For example, the preset joint angle range is a preset joint angle range for a male group, a preset joint angle range for a female group, etc.

In some embodiments, the preset joint angle range is determined by a minimum value and a maximum value of sample joint angles used to determine the first mapping relationship (or the second mapping relationship). The first mapping relationship exists between the joint angle in the preset joint angle range and the sensing data related to the target finger joint.

In 670, in response to determining that the first joint angle is outside the preset joint angle range, the preset joint angle range may be updated.

In some embodiments, the updating the preset joint angle range includes replacing an upper limit and/or a lower limit of the preset joint angle range. The processing device 410 may obtain an updated preset joint angle range by updating the upper limit and/or the lower limit of the preset joint angle range. More descriptions regarding the updating the preset joint angle range may be found in FIG. 7 and its related descriptions.

In 680, a third mapping relationship between data in the updated preset data range and a joint angle in the updated preset joint angle range may be determined.

The third mapping relationship reflects a relationship between sensing data corresponding to the target finger joint and the joint angle. The sensing data corresponding to the target finger joint is within the updated preset data range. The joint angle corresponding to the target finger joint is within the updated preset joint angle range. The processing device 410 corrects the second mapping relationship based on the updated preset data range and the updated preset joint angle range to obtain the third mapping relationship.

It is understood that since the upper limit and/or the lower limit of the input range (i.e., an initial preset data range) of the second mapping relationship or the upper limit and/or the lower limit of the output range (i.e., the initial preset data range) of the second mapping relationship has changed, taking the second mapping relationship represented by a linear mapping function as an example, the processing device 410 needs to perform data fitting on the second mapping relationship such that the sensing data in the updated preset data range and the joint angle in the updated preset joint angle range satisfy the mapping relationship again. The processing device 410 may obtain the third mapping relationship in a manner similar to operation 640.

Merely by way of example, the second mapping relationship is represented by the linear mapping relationship. Initially, the preset data range is [1,100], and the preset joint angle range is [0, 90]. At this time, when the sensing data is 1, the corresponding joint angle is 0°. When the sensing data is 100, the corresponding joint angle is 90°. When the preset joint angle range and/or the upper limit and/or the lower limit of the preset joint angle range is updated, for example, the updated preset data range is [1, 150] and the updated preset joint angle range is [0, 100], the second mapping relationship needs to be updated (e.g., by performing data fitting), so that the sensing data in the updated preset data range and the joint angle in the updated preset joint angle range satisfies a new mapping relationship, i.e., the third mapping relationship.

It should be noted that the above description of method 600 is for illustrative purposes only and is not intended to limit the scope of the present disclosure. A person of ordinary skill in the art can make various changes and modifications under the teaching of the present disclosure. However, these changes and modifications do not depart from the scope of the present disclosure. In some embodiments, the method 600 may be completed with one or more additional operations not described and/or without one or more operations discussed above. In addition, the order of method 600 is not limiting. For example, operations 660-680 may be omitted, and the processing device 410 may not update the preset joint angle range but use the second mapping relationship as the final mapping relationship. As another example, the method 600 may include an operation of updating the preset joint angle range in response to determining that the first sensing data is within the preset data range. More descriptions regarding updating the preset joint angle range in response to determining that the first sensing data is within the preset data range may be found in FIG. 7 and its related descriptions, which are not repeated here. As another example, the method 600 may further include an operation of determining the joint angle of the target finger joint based on the second mapping relationship (or the third mapping relationship).

In some embodiments, when the first sensing data is within the preset data range, the preset data range may not be updated, and the first joint angle may be obtained based on the first sensing data and the first mapping relationship. The first mapping relationship is generated based on the preset data range and the preset joint angle range. Therefore, the first joint angle obtained based on the first sensing data and the first mapping relationship should be within the preset joint angle range. However, due to insufficient sample data used when generating the first mapping relationship or inaccurate setting of the first mapping relationship, the obtained first joint angle may be outside the preset joint angle range. In this case, the preset joint angle range needs to be updated. FIG. 7 is a flowchart illustrating a process of updating a preset joint angle range according to some embodiments of the present disclosure. As shown in FIG. 7, a method 700 may include the following operations.

in 710, first sensing data relating to a target finger joint of a user may be obtained, the first sensing data being collected using at least one sensor, each of the at least one sensor being arranged in a glove body worn by the user and located at or near the target finger joint.

The processing device 410 may obtain the first sensing data related to the target finger joint of the user in a manner similar to operation 610. More descriptions may be found in operation 610 of FIG. 6, which is not repeated here.

In 720, a preset data range corresponding to the first sensing data may be obtained, and there is a first mapping relationship between data in the preset data range and a joint angle of the target finger joint.

The processing device 410 may obtain the preset data range corresponding to the first sensing data in a manner similar to operation 620. More descriptions may be found in operation 620 of FIG. 6, which is not repeated here.

In 730, in response to determining that the first sensing data is within the preset data range, a first joint angle of the target finger joint may be determined based on the first mapping relationship and the first sensing data.

For example, the processing device 410 may input the first sensing data into the first mapping relationship and output the first joint angle using the first mapping relationship. For example, for a specific target finger joint, a corresponding mapping function takes the first sensing data of all target finger joints as independent variables and takes the first joint angle of the specific target finger joint as a dependent variable. As another example, for a specific target finger joint, the input to a corresponding machine learning model is the sensor data of all target finger joints, and the output is the joint angle of the specific target finger joint.

In 740, a preset joint angle range corresponding to the target finger joint may be obtained.

The preset joint angle range refers to a data range generated based on a lower limit and an upper limit of the preset angle range of the joint angle of the target finger joint. In some embodiments, the preset joint angle range may be determined by a minimum value and a maximum value of sample joint angles used to determine the first mapping relationship. The joint angles in the preset joint angle range and the sensing data related to the target finger joint have the first mapping relationship. More descriptions regarding the preset joint angle range may be found in FIG. 6 and its related descriptions.

In 750, in response to determining that the first joint angle is outside the preset joint angle range, the preset joint angle range may be updated.

The first joint angle being outside the preset joint angle range refers to that the first joint angle is greater than an upper limit of the preset joint angle range, or the first joint angle is less than a lower limit of the preset joint angle range.

The processing device 410 may compare the first joint angle with an upper limit value or a lower limit value of the preset joint angle range to determine that the first joint angle is outside the preset joint angle range, and then update the preset joint angle range based on the first joint angle.

In some embodiments, the updating the preset joint angle range includes replacing the upper limit and/or the lower limit of the preset joint angle range. For example, if the first joint angle is greater than the upper limit of the preset joint angle range, the processing device 410 may replace the upper limit of the preset joint angle range with the first joint angle, thereby updating the upper limit of the preset joint angle range and obtaining an updated preset joint angle range. As another example, if the first joint angle is less than the lower limit of the preset joint angle range, the processing device 410 may replace the lower limit of the preset joint angle range with the first joint angle, thereby obtaining an updated preset joint angle range. It should be noted that updating the preset joint angle range may include one or a combination of updating the upper limit and the lower limit of the preset joint angle range.

In 760, a fourth mapping relationship between data in the preset data range and the joint angle in the updated preset joint angle range may be determined.

The processing device 410 may correct the first mapping relationship based on the preset data range and the updated preset joint angle range to obtain the fourth mapping relationship.

The processing device 410 may update the first mapping relationship in a manner similar to operation 680 to obtain the fourth mapping relationship. More descriptions may be found in FIG. 6 and its related descriptions.

When calibrating glove data, a range of initial sensing data actually collected when the user first wears the glove body may be determined. The range may be updated based on sensing data collected when the user (e.g., the same user or different users) wears the glove body a plurality of times to obtain the preset data range. The first mapping relationship may be corrected based on the preset data range to achieve glove data calibration.

When determining the range of initial sensing data collected when the user first wears the glove body, the processing device may first generate an initial data range (the initial data range may be an arbitrarily set virtual parameter range). The initial data range may be updated based on actually collected sensor data to obtain an actual data range. If the initial data range is set unreasonably, for example, if the initial data range is much larger than a range of sensing data actually generated by the user, the initial data range may not be updated. For example, assuming that the sensing data actually generated by the user is in a range of 1-90, and the initial data range is set to 0-100, the initial sensing data actually generated by the user is always within the initial data range. This prevents the processing device from triggering an update of the initial data range, and thus an actual data range may not be output, and the finally obtained preset data range is inaccurate. Therefore, the initial data range may be set to ensure that the initial data range may be updated with the actually collected initial sensing data. For example, the initial data range may be set so that the actually collected initial sensing data is always outside the initial data range, thereby triggering the update of the initial data range. In some embodiments, the initial data range may be determined through a cross-assignment process to obtain the preset data range.

FIG. 8 is a flowchart illustrating a process of generating a preset data range according to some embodiments of the present disclosure. As shown in FIG. 8, a method 800 may include the following operations.

In 810, initial sensing data may be obtained, the initial sensing data being data generated when the user wears the glove body and makes a designated action.

In some embodiments, the designated action includes a fist-clenching action, and the fist-clenching action corresponds to a maximum joint angle of the target finger joint.

In some embodiments, the designated action includes a finger-spreading action, and the finger-spreading action corresponds to a minimum joint angle of the target finger joint. More descriptions regarding the designated action may be found in FIG. 6 and its related descriptions.

In 820, an initial data range may be obtained.

In some embodiments, an upper limit of the initial data range may be less than a lower limit of the initial data range. The upper limit and the lower limit of the initial data range may be determined based on a statistical value of historical sensing data. For example, a minimum value of the historical sensing data (or a value less than the minimum value) may be used as the upper limit of the initial data range, and a maximum value of the historical sensing data (or a value greater than the maximum value) may be used as the lower limit of the initial data range. In this case, the upper limit of the initial data range is less than the lower limit of the initial data range.

In 830, in response to determining that the initial sensing data is outside the initial data range, an updated data range may be obtained by updating the initial data range and designating the updated data range as the preset data range.

The initial sensing data being outside the initial data range refers to that the initial sensing data is greater than the upper limit of the initial data range, or the initial sensing data is less than the lower limit of the initial data range.

The initial data range is obtained by cross-assignment of the historical sensing data, the upper limit is less than the lower limit. For example, the upper limit of the initial data range is 1, and the lower limit is 100. In this case, any initial sensing data is outside the initial data range, thereby triggering an update of the initial data range.

In some embodiments, when the user performs the fist-clenching action, updating the initial data range includes replacing the upper limit of the initial data range with the initial sensing data. The fist-clenching action corresponds to the maximum joint angle of the target finger joint. The initial sensing data at this time is the maximum and is greater than the upper limit of the initial data range. A processing device 410 may replace the upper limit of the initial data range with the initial sensing data, thereby updating the initial data range.

In some embodiments, when the user makes the finger-spreading action, the updating the initial data range includes replacing the lower limit of the initial data range with the initial sensing data. The finger-spreading action corresponds to the minimum joint angle of the target finger joint. The initial sensing data at this time is the minimum and is less than the lower limit of the initial data range. The processing device 410 may replace the lower limit of the initial data range with the initial sensing data, thereby updating the initial data range.

The processing device 410 may update the upper limit and the lower limit of the initial data range to obtain the updated data range. In some embodiments, the processing device 410 may update the initial data range based on the initial sensing data obtained when different users make the designated action (e.g., the fist-clenching action and the finger-spreading action), and the updated data range is used as the preset data range.

The cross-assignment manner is used to obtain the preset data range, this ensures that the initial sensing data is always outside the initial data range, forces an update of the upper limit and/or the lower limit of the initial data range, which avoids a situation where an unsuitable initial data range may not be updated based on the sensing data, thereby ensuring the orderly progress of the method.

The foregoing description of the basic concepts is provided as an example, and it is apparent to those skilled in the art that the foregoing detailed disclosure is merely exemplary and does not constitute a limitation to the present disclosure. Although not explicitly stated herein, those skilled in the art may make various modifications, improvements, and amendments to the present disclosure. Such modifications, improvements, and amendments are suggested in the present disclosure. Therefore, such modifications, improvements, and amendments still fall within the spirit and scope of the exemplary embodiments of the present disclosure.

Meanwhile, the present disclosure uses specific words to describe the embodiments of the present disclosure. For example, "one embodiment," "an embodiment," and/or "some embodiments" mean that a certain feature, structure, or characteristic is related to at least one embodiment of the present disclosure. Therefore, it should be emphasized and noted that the terms "an embodiment," "one embodiment," or "an alternative embodiment" mentioned two or more times in different locations in the present disclosure do not necessarily refer to the same embodiment. In addition, certain features, structures, or characteristics in one or more embodiments of the present disclosure may be appropriately combined.

In addition, unless explicitly stated in the claims, the order of processing elements and sequences, the use of numbers and letters, or the use of other names in the present disclosure are not intended to limit the order of the processes and methods of the present disclosure. Although the foregoing disclosure discusses some embodiments of the invention currently considered useful through various examples, it should be understood that such details are for illustrative purposes only. The appended claims are not limited to the disclosed embodiments. Instead, the claims are intended to cover all modifications and equivalent combinations that conform to the substance and scope of the embodiments of the present disclosure. For example, although the implementation of various components described above may be embodied in a hardware device, it may also be implemented as a software only solution, e.g., an installation on an existing server or mobile device.

Similarly, it should be noted that, in order to simplify the expression disclosed in the present disclosure and thereby help the understanding of one or more embodiments of the invention, the description of the embodiments of the present disclosure sometimes combines multiple features into one embodiment, drawing, or description thereof. However, this disclosure method does not mean that the object of the present disclosure requires more features than those mentioned in the claims. Rather, claimed subject matter may lie in less than all features of a single foregoing disclosed embodiment.

In some embodiments, numbers describing the quantity of components and attributes are used. It should be understood that such numbers used in the description of the embodiments are modified by the terms "about," "approximately," or "substantially" in some examples. Unless otherwise stated, "about," "approximately," or "substantially" indicates that the stated number allows a variation of ±20%. Accordingly, in some embodiments, the numerical parameters used in the specification and claims are approximate values. These approximate values may vary according to the characteristics required by individual embodiments. In some embodiments, the numerical parameters should consider the specified number of significant digits and adopt the method of general digit retention. Although the numerical ranges and parameters used to confirm the breadth of the scope in some embodiments of the present disclosure are approximate values, in specific embodiments, the setting of such numerical values is as precise as possible within a feasible range.

For each patent, patent application, patent application publication, and other materials, such as articles, books, specifications, publications, documents, etc., cited in the present disclosure, the entire contents thereof are hereby incorporated by reference into the present disclosure. Excluded are application history documents that are inconsistent with or conflict with the content of the present disclosure. Also excluded are documents that limit the broadest scope of the claims of the present disclosure (whether currently or subsequently appended to the present disclosure). It should be noted that if the description, definition, and/or use of terms in the ancillary materials of the present disclosure are inconsistent with or conflict with the content described in the present disclosure, the description, definition, and/or use of terms in the present disclosure shall prevail.

Finally, it should be understood that the embodiments described in the present disclosure are only used to illustrate the principles of the embodiments of the present disclosure. Other variations may also fall within the scope of the present disclosure. Therefore, by way of example and not limitation, alternative configurations of the embodiments of the present disclosure may be considered consistent with the teachings of the present disclosure. Accordingly, the embodiments of the present disclosure are not limited to the embodiments explicitly introduced and described in the present disclosure.

## Claims

1. A method for calibrating glove data, comprising:
obtaining first sensing data relating to a target finger joint of a user, the first sensing data being collected using at least one sensor, each of the at least one sensor being arranged in a glove body worn by the user and located at or near the target finger joint;
obtaining a preset data range corresponding to the first sensing data, wherein there is a first mapping relationship between data in the preset data range and a joint angle of the target finger joint;
in response to determining that the first sensing data is outside the preset data range, updating the preset data range; and
determining a second mapping relationship between data in the updated preset data range and the joint angle of the target finger joint.

2. The method according to claim 1, wherein the updating the preset data range comprises: replacing an upper limit and/or a lower limit of the preset data range.

3. The method according to claim 1, wherein at least a portion of the first sensing data is generated when the user wears the glove body and makes a designated action.

4. The method according to claim 3, wherein the designated action includes a fist-clenching action, the fist-clenching action corresponding to a maximum joint angle of the target finger joint.

5. The method according to claim 4, further comprising:
when the user makes the fist-clenching action, in response to determining that the first sensing data is within the preset data range, updating the preset data range.

6. The method according to claim 5, wherein the updating the preset data range includes:
replacing an upper limit of the preset data range with the first sensing data.

7. The method according to claim 3, wherein the designated action further includes a finger-spreading action, the finger-spreading action corresponding to a minimum joint angle of the target finger joint.

8. The method according to claim 7, further comprising:
when the user makes the finger-spreading action, in response to determining that the first sensing data is within the preset data range, updating the preset data range.

9. The method according to claim 8, wherein the updating the preset data range includes:
replacing a lower limit of the preset data range with the first sensing data.

10. The method according to claim 3, wherein there are a plurality of target finger joints, the first sensing data relating to different target finger joints is generated when the user makes the same designated action.

11. The method according to claim 3, wherein there are a plurality of target finger joints, the first sensing data relating to at least two different target finger joints in the plurality of target finger joints is generated when the user makes different designated actions.

12. The method according to claim 1, wherein at least a portion of the first sensing data is dynamically collected when the user is wearing the glove body.

13. The method according to claim 12, wherein the updating the preset data range includes:
in response to determining that, before collecting the first sensing data, at least one or more sets of sensing data relating to the target finger joint is outside the preset data range, updating the preset data range using the first sensing data.

14. The method according to claim 1, further comprising:
in response to determining that the first sensing data is within the preset data range, determining a first joint angle of the target finger joint based on the first mapping relationship and the first sensing data;
obtaining a preset joint angle range corresponding to the target finger joint; and
in response to determining that the first joint angle is outside the preset joint angle range, updating the preset joint angle range.

15. The method according to claim 14, wherein the updating the preset joint angle range comprises: replacing an upper limit and/or a lower limit of the preset joint angle range.

16. The method according to claim 1, further comprising:
determining a first joint angle of the target finger joint based on the first sensing data and the second mapping relationship;
obtaining a preset joint angle range corresponding to the target finger joint; and
in response to determining that the first joint angle is outside the preset joint angle range, updating the preset joint angle range.

17. The method according to claim 16, wherein the updating the preset joint angle range comprises: replacing an upper limit and/or a lower limit of the preset joint angle range.

18. The method according to claim 1, wherein the target finger joint includes a portion of finger joints of the user.

19. The method according to claim 1, wherein the target finger joint includes all metacarpophalangeal joints and all proximal interphalangeal joints of the user.

20. The method according to claim 1, wherein the first mapping relationship is a linear mapping relationship.

21. The method according to claim 1, wherein the preset data range is determined based on a cross-assignment process, the cross-assignment process includes:
obtaining initial sensing data, the initial sensing data being data generated when the user wears the glove body and makes a designated action;
obtaining an initial data range, the initial data range having a lower limit greater than an upper limit; and
in response to determining that the initial sensing data is outside the initial data range, obtaining an updated data range by updating the initial data range and designating the updated data range as the preset data range.

22. The method according to claim 21, wherein the designated action includes a fist-clenching action, the fist-clenching action corresponding to a maximum joint angle of the target finger joint.

23. The method according to claim 22, wherein the updating the initial data range includes:
replacing an upper limit of the initial data range with the initial sensing data.

24. The method according to claim 21, wherein the designated action includes a finger-spreading action, the finger-spreading action corresponding to a minimum joint angle of the target finger joint.

25. The method according to claim 24, wherein the updating the initial data range includes:
replacing a lower limit of the initial data range with the initial sensing data.

26. A system for calibrating glove data, comprising:
at least one storage medium including a set of instructions; and
at least one processor in communication with the at least one storage medium, wherein when executing the set of instructions, the at least one processor causes the system to perform a method according to any one of claims 1 to 25.

27. A non-transitory computer-readable medium, comprising executable instructions, wherein the executable instructions, when executed by at least one processor, cause the at least one processor to perform a method according to any one of claims 1 to 25.
